# EUROPÄISCHE PATENTSCHRIFT

(11) **EP 1 797 475 B1**
(45) Veröffentlichungstag und Bekanntmachung des Hinweises auf die Patenterteilung: **04.11.2015**
(21) Anmeldenummer: 05789675.5
(22) Anmeldetag: 15.09.2005
(51) Int. Cl.: G02C 13/00, A61B 3/11

(54) **MESSBÜGEL, SOWIE EINRICHTUNG UND VERFAHREN ZUR BESTIMMUNG DES VORNEIGUNGSWINKELS ALPHA EINER BRILLENFASSUNG**
MEASURING BRACE, AND DEVICE AND METHOD FOR DETERMINING THE FORWARD TILT ANGLE ALPHA OF A SPECTACLE FRAME
ETRIER DE MESURE, DISPOSITIF ET PROCEDE POUR DETERMINER L'ANGLE D'INCLINAISON ANTERIEURE ALPHA D'UNE MONTURE DE LUNETTES

(30) Priorität: 15.09.2004 DE 102004045012
(43) Veröffentlichungstag der Anmeldung: 20.06.2007
(73) Patentinhaber: Carl Zeiss Vision GmbH, 73430 Aalen (DE)
(72) Erfinder: KUBITZA, Matthias, 73431 Aalen (DE)
(86) Internationale Anmeldenummer: PCT/EP2005/009949
(87) Internationale Veröffentlichungsnummer: WO 2006/029875

(56) Entgegenhaltungen:
- EP-A- 1 038 495
- DE-A1- 10 033 983
- FR-A- 2 829 842
- US-A- 4 177 571

## Beschreibung

Die Erfindung betrifft einen Messbügel zum lösbaren Befestigen an einer Brillenfassung mit einer Traverse und zwei Schenkeln, wobei eine Vorderseite des Messbügels zumindest drei Frontzielmarken für eine Messung des Vorneigungswinkels α einer zu vermessenden Brillenfassung aufweist und zumindest eine der Frontzielmarken gegenüber den zumindest zwei anderen Frontzielmarken im Wesentlichen senkrecht zur Vorderseite des Messbügels räumlich versetzt angeordnet ist.

Die Erfindung betrifft des Weiteren eine Einrichtung zur Bestimmung des Vorneigungswinkels α einer Brillenfassung sowie Verfahren zur Bestimmung des Vorneigungswinkels α einer Brillenfassung sowie des Verdrehwinkels ε.

Bei der optischen Brillenglaszentrierung werden Messbügel eingesetzt zur Ermittlung der Zentrierdaten einer bereits anatomisch angepassten Brillenfassung in Gebrauchsbedingungen. Sie können sowohl zur Massverkörperung als auch Detektion der Fassungsvorneigung und Kopfdrehung bei Videozentriersystemen eingesetzt werden.

Videozentriersysteme sind auf dem Markt bekannt. So z.B. das System Video Infral der Firma Carl Zeiss AG sowie ein Videozentriersystem aus der WO 01/84222.

Herkömmlich erfolgt die optische Brillenglaszentrierung dadurch, dass man den Klienten mit einer Videoeinrichtung aus einer größeren Entfernung, z.B. aus 5 m Entfernung betrachtet und in den Videobildern die relevanten Winkel und Maße ermittelt und mittels dieser die Zentrierdaten für die jeweilige Brillenfassung bestimmt.

Es sind Messbügel bekannt aus der WO 98/15222, US 2002/0171806 A, DE 100 20 391 A1, DE 203 02 798 U1, DE 100 33 983 A1, DE 100 20 005 A1, DE 100 63 536 A1. Zudem ist ein Messbügel Visu Point der Firma Ulev GmbH bekannt, der einfach lose auf die Brillenfassung aufgesetzt wird. Nachteilig hieran ist, das der Messbügel bei geringer Bewegung der Testperson von der Brillenfassung fallen kann. Weiterhin befinden sich zwei Stangen im Gesichtsfeld des Kunden, was wiederum störend ist und zu Messfehlem führen kann.

Die EP1038495A2 offenbart einen Messbügel mit drei Frontzielmarken. Die mittlere der drei Frontzielmarken ist gegenüber den beiden seitlichen Frontzielmarken erhaben.

Die Aufgabe der Erfindung besteht darin, neben der Messung eines

Vorneigungswinkels α auch die Messung eines Verdrehwinkels ε bei habitueller Haltung der Testperson zu ermöglichen. Durch Berücksichtigung dieses Verdrehwinkels ε kann der Hornhautscheitelabstand (HSA) oder ein Abstand Hornhautscheitel zu Fassungsebene zumindest annähernd fehlerfrei bestimmt werden.

Die Aufgabe wird durch den Anspruch 1 gelöst, wobei zumindest drei Seitenzielmarken zur Messung eines Verdrehwinkels ε vorgesehen sind. Eine der Seitenzielmarken ist gegenüber den zumindest zwei weiteren Seitenzielmarken im Wesentlichen senkrecht zum Seitenbereich des Messbügels räumlich versetzt angeordnet. Dabei kann diese Seitenzielmarke auf einem in Richtung einer Aufnahmeeinheit hervorstehenden Seitenausleger oder in einer Einbuchtung angeordnet sein. Somit ist diese Seitenzielmarke in Richtung einer für eine Seitenaufnahme vorgesehenen Aufnahmeeinheit gegenüber den zumindest zwei weiteren Seitenzielmarken hervorgehoben oder zurückgesetzt angeordnet. Hierdurch kann eine Verdrehung des Messbügels und damit auch der von dem Messbügel gehaltenen Brillenfassung ermittelt werden.

Der Hornhautscheitelabstand oder der Abstand Hornhautscheitel zu Fassungsebene wird mit Hilfe der Seitenbildaufnahme, die die Seitenzielmarken zeigt ermittelt.

Eine erfindungsgemäße Einrichtung zur Bestimmung des Vorneigungswinkels α einer Brillenfassung bedient sich eines erfindungsgemäßen Messbügels. Die Einrichtung weist zumindest eine optische Aufnahmeeinheit, eine Auswerteeinheit und einen erfindungsgemäßen Messbügel auf.

Die Aufgabe wird zudem durch ein erfindungsgemäßes Verfahren nach Anspruch 18 gelöst, wobei ein erfindungsgemäßer Messbügel auf eine Brillenfassung aufgesetzt wird und eine Bildaufnahme von der Seite mit Brillenfassung und Messbügel gemacht wird und anhand dieser Bildaufnahme der Verdrehwinkel ε mathematisch bestimmt wird. Hierdurch kann eine Verdrehung des Messbügels und damit auch der von dem Messbügel gehaltenen Brillenfassung ermittelt werden.

Unter Brillenfassung wird eine Brille ohne eingesetzte Gläser (Linsen) verstanden. Bei randlosen oder zumindest teilweise randlosen Brillenfassungen, z.B. Bohrbrillen und Nylorbrillen, sind transparente Stützscheiben vorgesehen, die die Messungen nicht beeinträchtigen.

Bei Verwendung des erfindungsgemäßen Zentrierbügels können mittels eines Videozentriersystems oder auch mittels einer einfachen Kamera die Winkel einer auszumessenden Brillenfassung zur vertikalen und horizontalen Bezugsrichtung ermittelt werden. Die Winkel umfassen sowohl die vertikalen als auch horizontalen Zentrierdaten, d.h. der vertikale Vorneigungswinkel der Brillenfassung als auch die horizontale Kopfneigung zur Seite sowie die Kopfdrehung zur Seite werden in der Gebrauchssituation mit einem Videozentriersystem gemessen.

Bei Anwendung einer hochauflösenden Kamera kann der Kunde eine im wesentlichen beliebige Entfernung zur optischen Aufnahmeeinheit aufweisen, z.B. in einem Abstand bis zu 2 m Entfernung stehen. Vorzugsweise aufgrund der oftmals beim Augenoptiker oder Augenarzt begrenzten Raumverhältnisse kann der Kunde sich in 0,5 bis 1,5 m Entfernung zur optischen Aufnahmeeinheit aufhalten.

Ein genaues Ausrichten des Kunden zur optischen Achse der Bildaufnahmeeinheit ist nicht erforderlich, da durch die Bestimmung der verschiedenen Winkel und Maße die für den Kunden zu ermittelnden Zentrierpunkte optimal bestimmt werden können. Sollte die Bildaufnahmeeinheit nicht genau auf Höhe der Augenpartie des Kunden sein, so kann die Bildaufnahmeeinheit gekippt werden und der Kippwinkel in die Berechnung der zu ermittelnden Winkel und Maße eingehen

Derjenige Punkt innerhalb der Scheibenebene, der mit dem Bezugspunkt des eingeschliffenen Brillenglases zusammenfallen soll, wird als Zentrierpunkt P bezeichnet. Die Koordinaten x und y des Zentrierpunkts sind gleich dem Betrag des Abstandes des Zentrierpunkts von der nasalen senkrechten Seite bzw. von der unteren waagerechten Seite des Kastensystems, gemessen in der Scheibenebene. Die horizontale Dezentration *u* und die vertikale Dezentration *v* des Zentrierpunktes sind der Abstand des Zentrierpunktes von der vertikalen bzw. horizontalen Mittellinie des Kastensystems, gemessen in der Fassungsebene.

Der Hornhautscheitelabstand, der Abstand Hornhautscheitel zu Fassungsebene, der vertikale Vorneigungswinkel sowie die Kopfneigung zur Seite und Kopfdrehung zur Seite werden nach dem Parallaxenprinzip ermittelt. Da jeweils eine der drei Zielmarken in Richtung der optischen Achse der Aufnahmeeinheit unterschiedlich zu den beiden anderen liegt, d.h. näher zur optischen Aufnahmeeinheit hin oder weiter von dieser weg als die beiden anderen Zielmarken, entsteht je nach Neigung oder Drehung des Kopfes eine entsprechende Parallaxe, die ein Maß für den jeweiligen Winkel ist.

Die Messungen des Vorneigungswinkels, der Kopfneigung zur Seite, der Kopfdrehung zur Seite und des Hornhautscheitelabstands können simultan oder nacheinander erfolgen. Anstelle einer Kopfdrehung kann selbstverständlich auch eine Drehung des Körpers stehen.

Der Messbügel lässt sich einfach an den gängigen Brillenfassungen montieren. Es können sowohl Brillen mit als auch ohne Rand vermessen werden. Der Messbügel ist leicht zu positionieren. Da der Messbügel das Gesichtsfeld des Kunden zumindest weitestgehend freilässt, wird der Kunde nicht zu Haltungsänderungen veranlasst.

Es wird ein räumlich zum Beobachter ausgedehnter Frontausleger, der z.B. als Hohlkegel ausgebildet sein kann, mit einer mittleren Frontzielmarke, d.h. Frontzielmarkierung eingesetzt, wobei dieser mittlerer Frontausleger hervorstehend gegenüber den in den seitlich auf der Vorderseite des Messbügels angeordneten Frontzielmarken ausgebildet ist. Der Messbügel kann vom Augenoptiker, Augenarzt oder dem Kunden selber an der Brillenfassung angebracht werden. Die Brillenfassung kann bereits verglast sein oder noch ohne Verglasung sein. Der Messbügel weist ein Gewicht von weniger als 50g bevorzugt weniger als 20g auf.

Vorteilhafte Ausführungsformen sind in den abhängigen Unteransprüchen angegeben.

Bevorzugte Ausführungsformen des Messbügels ermöglichen eine Massverkörperung , so das problemlos mit unterschiedlichen Bildvergrößerungen gearbeitet werden kann. Die Massverkörperung kann beispielsweise mittels Markierungen, die in einem bestimmten Abstand zueinander angeordnet sind oder einen Balken definierter Länge erfolgen.

Die vorliegende Erfindung hat den Vorteil, dass der Messbügel auf Fassungen verschiedenster Form sicher aufgesetzt werden kann. D.h. sowohl kleine als auch große Formen, Brillenfassungen mit Rand oder randlose Brillenfassungen.

Der beanspruchte Messbügel wird durch eine Klemmvorrichtung an die Brillenfassung angebracht.

Ein weiterer Vorteil des Messbügels ist die leichtere Handhabung bei der Befestigung des Messbügels auf der Brillenfassung. Diese wird durch die Koppelung, insbesondere die synchronisierte Koppelung der beiden unteren Messbügelschenkel über ein Zahnrad und zwei Zahnstangen erreicht. Unter synchron wird verstanden, dass beide Messbügelschenkel gleichzeitig bewegt werden .Somit öffnen sich beide Messbügelschenkel gleichzeitig und bevorzugt symmetrisch. Die Brillenfassung kann bequem eingelegt werden. Eine Einhandbedienung wird somit ermöglicht.

Durch die konischen Auflageflächen wird der Messbügel automatisch an die Brillenfassung gedrückt. Ein fester Sitz ist somit gewährleistet

Der Messbügel weist kontrastreiche Zielmarken auf, die bei einer automatisierten Verarbeitung eindeutig erkannt werden können. Diese Markierungen sind bevorzugt in Dreiergruppen angeordnet. Die Gruppen weisen voneinander einen möglichst großen Abstand auf, z.B. größer 10 cm, bevorzugt größer 14 cm.

Um einen Messfehler einer 70mm großen Pupillendistanz auf 0,05 mm einzuschränken, sollte der Abstand der Zielmarken auf 1/10mm bekannt sein.

An der Seite des Messbügels angebracht Zielmarken, d.h. in einem Winkel von im Wesentlichen 90 ° zu den Frontzielmarken angebrachte Seitenzielmarken ermöglichen eine Kalibrierung der Seitenbildaufnahme zur HSA-Bestimmung (HSA = Hornhautscheitelabstand). Da die Seitenzielmarken in unterschiedlichen Ebenen angebracht sind, ist eine Kompensation der Fehler durch eine mögliche Kopfdrehung des Kunden während der Bildaufnahme im Seitenbild möglich. Der HSA oder der Abstand Hornhautscheitel zu Fassungsebene kann somit ohne langwieriges Ausrichten der Versuchsperson gemessen werden.

Der erfinderische Messbügel kann so positioniert werden, dass er weder in das Gesichtsfeld der jeweiligen Testpeson ragt noch diese zu Haltungsänderungen veranlasst.

Bei der Messung kann wie allgemein bekannt vorgegangen werden. Die Testperson befindet sich in einer bekannten oder einer während der Messung gemessenen Entfernung von vorzugsweise 0,5 bis 1,5 m und es wird nach Einnahme einer habituellen Haltung eine Seitenbildaufnahme aufgenommen. Mit dieser Seitenbildaufnahme können sowohl der Hornhautscheitelabstand, sowie bedarfsweise die Kopfdrehung zur Seite ausgemessen werden. Die Kopfdrehung zur Seite kann zur Korrektur des gemessenen Hornhautscheitelabstands herangezogen werden. Unter habitueller Haltung versteht man die dem Kunden eigene natürliche Haltung im Sitzen oder Stehen.

Die Vorneigung α, die Kopfneigung zur Seite ζ und die Kopfdrehung zur Seite ϕ können mittels einer Frontbildaufnahme ermittelt werden, bei der die Kunden ebenfalls eine habituelle Haltung einnehmen.

Die Zielmarken können unterschiedliche Gestaltung haben. Vorstellbar sind unter anderem schwarze Kreise oder in schwarz-weiße Segmente aufgeteilte Kreise. Die Zielmarken können beispielsweise aus Papier oder Kunststoff bestehen und auf den Messbügel aufgeklebt bzw. aufgestempelt sein.

Auf der Vorderseite des Messbügels können unterhalb der Frontzielmarken, z.B. auf den vorderen Abdeckkappen der Gelenke Anlagemarkierungen, z.B. in Form schwarzer Kreise, angebracht werden. Diese Anlagemarkierungen erleichtern die Berechnung der Anlagepunkte des erfindungsgemäßen Messbügels an eine randlose oder teilweise randlose Brillenfassung für den Fall, dass eine automatische Brillenranderfassung versagt. Die oberen Anlagepunkte, d.h. die Punkte, wo fassungslose Brillen bzw. Brillenfassungen in den oberen Fassungsaufnahmen anliegen, sind geometrisch fest definiert zu den Frontzielmarken. Die unteren Anlagepunkte , d.h. die Punkte, wo die Brillenfassungen in den unteren Fassungsaufnahmen anliegen, sind geometrisch fest definiert zu den Anlagemarkierungen. D.h. diese Punkte sind auch für fassungslose Brillen unterschiedlicher Größe gut erfassbar und damit ist die Form der Brille insgesamt leichter zu bestimmen.

Da der Messbügel als Massverkörperung dient und somit eine Kalibrierung für jede Messung ermöglicht ist, ist dieser aus einem stabilen und festen Material zu fertigen, um eine dauerhafte Maßhaltigkeit zu gewährleisten.

In einer bevorzugten Ausführungsform des Messbügels sind gekoppelte Klemmelemente zum Befestigen der Brillenfassung vorgesehen. Wenn der eine Schenkel sich öffnet, findet auch beim anderen Schenkel gleichzeitig oder zeitlich versetzt eine Öffnungsbewegung statt.

In einer weiteren bevorzugten Ausführungsform des Messbügels können die gekoppelten Klemmelemente synchronisiert sein. Dadurch können die Schenkel des Messbügels gleichzeitig geöffnet werden.

In einer weiteren bevorzugten Ausführungsform des Messbügel sind die Frontzielmarken bevorzugt auf einer waagerechten Geraden, bevorzugt im Bereich der Traverse, angeordnet.

In einer weiteren bevorzugten Ausführungsform des Messbügels kann eine mittlere Frontzielmarke auf einem hervorstehenden Ausleger angeordnet sein und sind zumindest zwei weitere Frontzielmarken beabstandet zueinander auf der Vorderseite einer Traverse des Messbügels angeordnet.

In einer weiteren bevorzugten Ausführungsform des Messbügels kann der Abstand zwischen vorderer Frontzielmarke und hinteren Frontzielmarken zwischen 5 und 50 mm betragen, bevorzugt zwischen 10 und 20 mm betragen.

In einer weiteren bevorzugten Ausführungsform des Messbügels können zur Maßverkörperung zumindest zwei Markierungen einen definierten Abstand voneinander, vorzugsweise von 10 bis 20 cm aufweisen.

In einer weiteren bevorzugten Ausführungsform des Messbügels kann dieser einhändig bedienbar ausgebildet sein.

In einer weiteren bevorzugten Ausführungsform des Messbügels kann zumindest eine Fassungsaufnahme zumindest eine im Wesentlichen konische Aufnahmefläche aufweisen.

In einer weiteren bevorzugten Ausführungsform des Messbügels können die Klemmelemente über ein Zahngetriebe gekoppelt sein.

Es ist auch vorstellbar, eine Feder z.B. in der Traverse anzuordnen, wobei die Enden der Feder über Zugbänder mit den Schenkeln verbunden sind. Beim Zusammendrücken der Feder werden dann die Zugbänder gespannt und die Schenkel öffnen sich zum Einlegen einer Brillenfassung und beim Loslassen der Feder kehren die Schenkel wieder soweit in ihre Ausgangsposition zurück, wie es die eingelegte Brillenfassung erlaubt.

In einer weiteren bevorzugten Ausführungsform des Messbügels können die gekoppelten Klemmelemente zumindest ein Zahnrad und zumindest eine Zahnstange bevorzugt zwei Zahnstangen aufweisen. Die Zahnstangen können über Verstellhebel bewegt werden. Vorstellbar ist auch ein Drehknopf an dem Zahnrad wodurch die Zahnstangen bewegt werden können.

In einer weiteren bevorzugten Ausführungsform des Messbügels können die gekoppelten Klemmelemente zumindest ein Zugband und eine Feder, bevorzugt zwei Zugbänder und zwei Federn aufweisen. Zugbänder können an den Zahnstangen angreifen und verbinden diese mit den Schenkeln. Die Federn können als Rückstellfedern für die Schenkel ausgebildet sein.

Die erfindungsgemäße Einrichtung kann auch zur Bestimmung des Winkels der Kopfneigung zur Seite, des Winkels der Kopfdrehung zur Seite und/oder zur Bestimmung des Hornhautscheitelabstands ausgebildet sein.

In einer bevorzugten Ausführungsform der erfindungsgemäßen Einrichtung ist die optische Aufnahmeeinheit als Videokamera oder Photoapparat ausgebildet.

In einer bevorzugten Ausführungsform der erfindungsgemäßen Einrichtung ist die Auswerteeinheit auch zur Bestimmung des Winkels der Kopfneigung zur Seite, des Winkels der Kopfdrehung zur Seite, des Hornhautscheitelabstands ausgebildet ist.

In einer bevorzugten Ausführungsform der erfindungsgemäßen Einrichtung ist die Auswerteeinheit zur Bestimmung der Zentrierpunkte der zu untersuchenden Brillenfassung ausgebildet.

In bevorzugten Ausführungsformen der erfindungsgemäßen Verfahren werden der Winkel der Kopfneigung zur Seite, der Winkel der Kopfdrehung zur Seite, der Hornhautscheitelabstand und oder der Abstand Hornhautscheitel zur Fassungsebene bestimmt. Hierbei kann der Verdrehwinkel ε berücksichtigt werden.

Schließlich werden in einer bevorzugten Ausführungsform des erfindungsgemäßen Verfahrens werden die Zentrierpunkte der zu untersuchenden Brillenfassung bestimmt.

Im Folgenden ist anhand einer bevorzugten Ausführungsform der erfindungsgemäße Messbügel die erfindungsgemäße Einrichtung und das erfindungsgemäße Verfahren beschrieben.

Zum besseren Verständnis der Anordnung der Zielmarken sind in einigen Zeichnungen x-y-z-Koordinatensysteme eingezeichnet, wobei x-, y- und z- Achsen senkrecht zueinander stehen.

Es zeigen:
Figur 1a: Winkel durch Kopfdrehung zur Seite bei Zentrierdatenmessung mittels Frontbild,
Figur 1b: Winkel durch Kopfneigung zur Seite bei Zentrierdatenmessung,
Figur 1c: Vorneigungswinkel,
Figur 2a: eine Frontansicht des erfindungsgemäßen Messbügels ohne Brillenfassung,
Figur 2b: der erfindungsgemäße Messbügel nach von oben gesehen,
Figur 2c: eine Rückansicht des erfindungsgemäßen Messbügels,
Figuren 2d: eine Seitenansicht des erfindungsgemäßen Messbügels,
Figur 3: eine Explosionsdarstellung des erfindungsgemäßen Messbügels,
Figur 4: eine Frontansicht des erfindungsgemäßen Messbügels mit Brillenfassung,
Figur 5: Detailansicht einer oberen und unteren Brillenfassungsaufnahme mit Brillenfassung,
Figur 6: Verdrehwinkel ε durch Kopfdrehung zur Seite bei Zentrierdatenmessung mittels Seitenbild,
Figur 7: Ausschnittsdarstellung der Seitenmarken des erfindungsgemäßen Messbügels,
Figur 8a: schematische Darstellung der Seitenmarken ohne Parallaxe und
Figur 8b: schematische Darstellung der Seitenmarken mit Parallaxe.

Herkömmlich erfolgt die optische Brillenglaszentrierung dadurch, dass man einer Versuchsperson, z.B. einem Kunden mit einer anatomisch angepassten Brillenfassung bei einem Augenoptiker oder Augenarzt einen Messbügel auf die glaslose Brillenfassung setzt und den Kopf des Kunden mit einer Videoeinrichtung aus einer größeren Entfernung, z.B. aus 5 m Entfernung betrachtet und in den Videobildern die relevanten Winkel misst.

Im einfachsten Fall können auch Photoaufnahmen gemacht werden Der Kunde schaut in Richtung eines Photoapparates und eine Bildaufnahme seines Gesichtes mit Brillenfassung und Messbügel wird genommen.

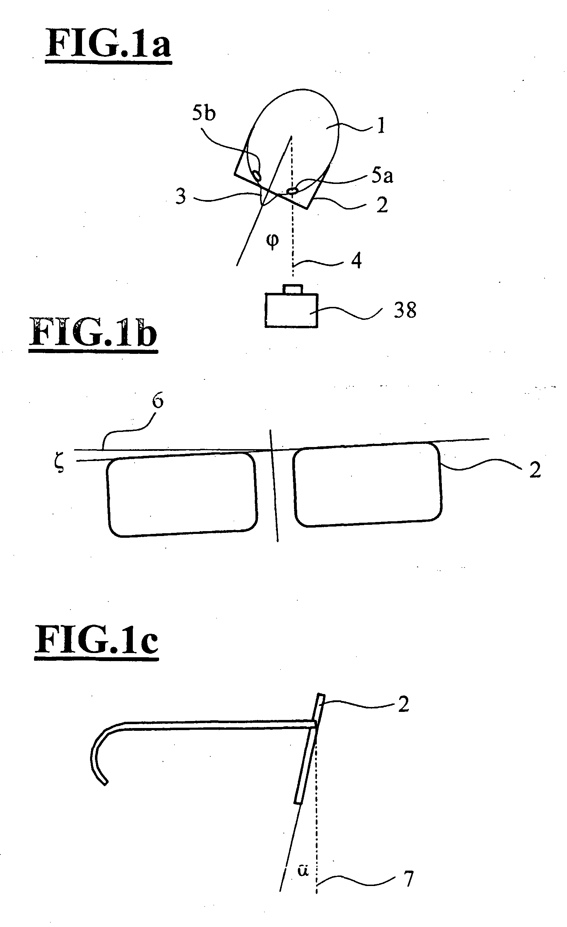

Während der Messung richtet sich der Kunde üblicherweise nach einer Fixationsmarke eines Videozentriersystems aus. Im Idealfall steht der Kunde exakt parallel zur optischen Achse des optischen Abbildungssystems, z.B. einer Videokamera. Häufig tritt aber der Fall ein, dass der Kunde den Kopf nach seinem Führungsauge bzw. nach seinen Sehgewohnheiten ausrichtet und damit einen Verdrehwinkel ϕ zur optischen Achse der Kamera einnimmt. Diese Kopfdrehung zur Seite ϕ ist in Figur 1 a schematisch dargestellt. Ein Kunde mit Kopf 1 mit Brillenfassung 2 auf seiner Nase 3 hat den Kopf von der idealen gestrichpunktet dargestellten Richtung, d.h. der optischen Achse 4 des nicht dargestellten optischen Abbildungssystems um dem Winkel ϕ weggedreht, so dass sein Führungsauge 5a nun genau in Richtung der optischen Achse schaut und das zweite Auge 5 b weggedreht ist. Die Auswirkungen einer ungewollten Drehung auf die Zentrierdaten können mit Hilfe des später erläuterten Messbügels erkannt und bei der Auswertung berücksichtigt werden. Hierfür ist der Winkel ϕ zu ermitteln. Die Aufnahmeeinheit 38 ist in der Verlängerung der gestrichpunkteten Linie angeordnet.

Weiterhin ist häufig bei der habituellen Kopfhaltung eines Kunden eine Neigung des Kopfes zur Seite um den Winkel ζ festzustellen. Dies ist in Figur 1b dargestellt. Die schematisch dargestellte Brillenfassung 2 ist gegenüber der Horizontalen 6 um den Winkel ζ zur linken Seite hin geneigt. Zur Ermittlung der richtigen Zentriermaße ist dieser Winkel ebenfalls zu bestimmen.

Für die vertikalen Zentriergrößen (Höhenzentrierung) und das Brillenglasdesign bei Individualbrillengläsern ist die Vorneigung der Brillenfassung 2 eine wichtige Größe. Dieser in Figur 1c dargestellte Vorneigungswinkel α muss ebenfalls zur Ermittlung der Zentrierdaten gemessen werden. Der Vorneigungswinkel α ist sowohl von der Anatomie des Kunden und dessen habitueller Kopf- und Körperhaltung als auch von dem Inklinationswinkel der Brillenfassung 2 abhängig. Maßgebend ist die Lage der Fassungsscheibenebene zur Raumvertikalen 7. Die Raumvertikale 7 ist hierbei als gestrichpunktete Linie dargestellt.

Sollte die Kamera des Videozentriersystems nicht auf Augenhöhe des Kunden sein, so kann die Kamera gekippt werden. Der zur Kompensation der Körpergrößen benötigte Kippwinkel der Kamera muss in die Berechnung der Vorneigung bzw. der weiteren Zentrierwerte eingehen. Die Vorneigung α ist eine Meßgröße, die bei der Bestimmung der Zentrierpunkte mathematisch berücksichtigt wird.

Die Zentriermaße können zur Auswertung in bekannter Weise auf ein Kastensystem bezogen sein.

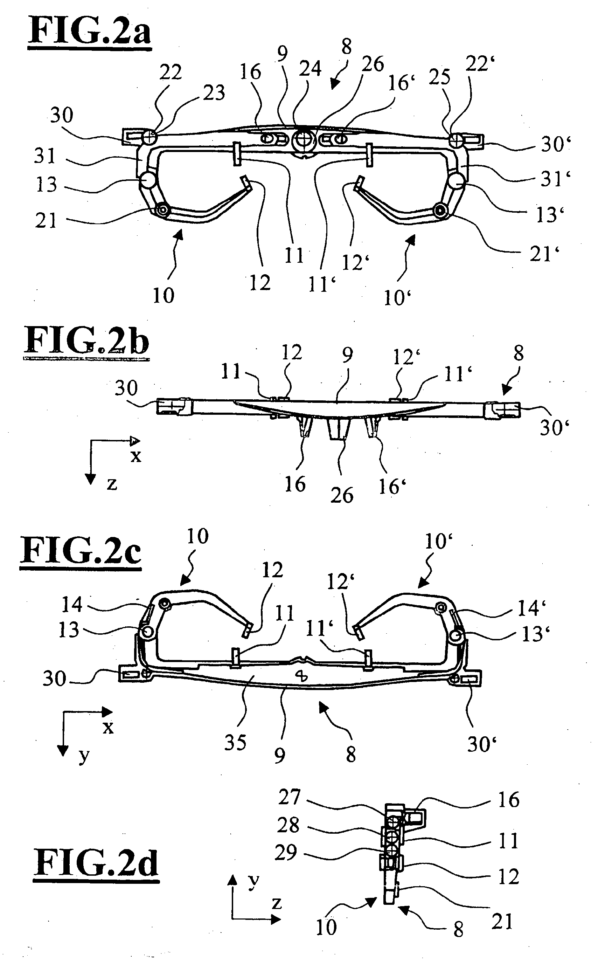

Figuren 2a bis 2d zeigen verschiedene Ansichten einer Ausführungsform des erfindungsgemäßen Messbügels.

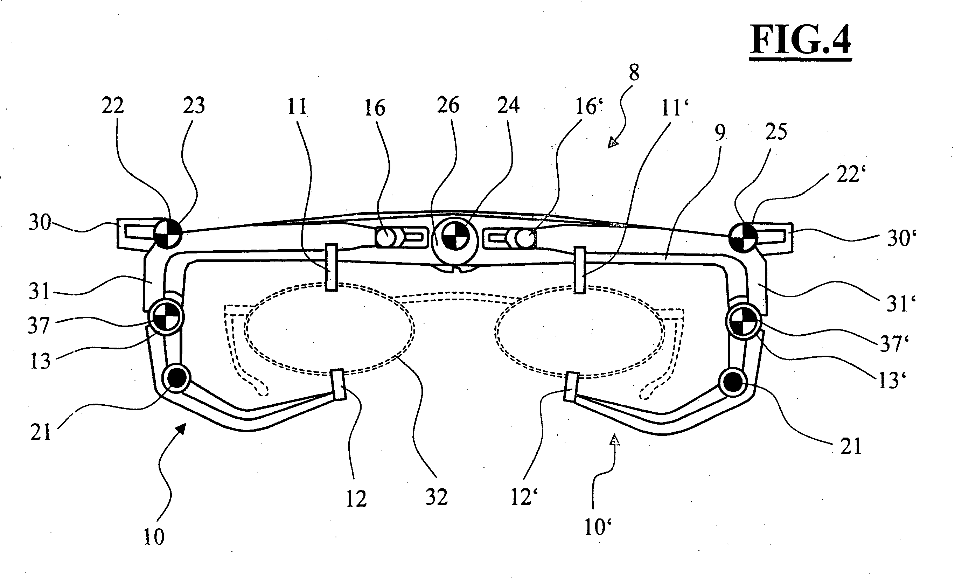

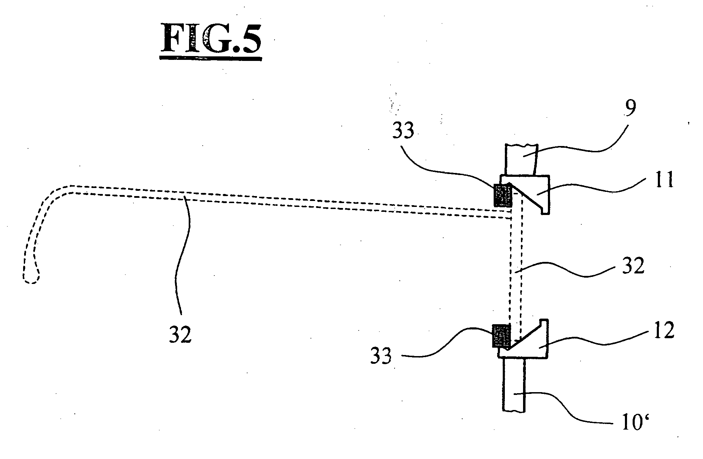

Der Messbügel 8 weist einen symmetrischen Aufbau mit einer Traverse 9 und zwei Schenkeln 10 und 10' auf. An der Traverse 9 sind zwei obere Fassungsaufnahmen 11 und 11' für den oberen Brillenrand der nicht dargestellten Brillenfassung einer Testperson angeordnet. Eine Ansicht mit Brillenfassung ist Figur 4 zu entnehmen. An den Enden der beiden Schenkel 10 und 10' sind jeweils eine untere Fassungsaufnahme 12 und 12' angeordnet. Zwei Fassungsaufnahmen 11 und 12 sind im Detail Figur 5 zu entnehmen.

Die Schenkel 10 und 10' sind zur Aufnahme einer Brillenfassung in die Fassungsaufnahmen 11, 11' und 12, 12' drehbar um ein jeweils dem Schenkel 10, 10' zugeordnetes Gelenk 13, 13' gelagert. Dadurch kann der Abstand zwischen oberen Fassungsaufnahmen 11, 11' und unteren Fassungsaufnahmen 12, 12' vergrößert und die Brillenfassung eingelegt werden. Vorgespannte Rückstellfedern, hier Schraubenfedern 14, 14', sorgen für einen festen Halt, d.h. Einklemmung der Brillenfassung in dem Messbügel 8. Nach Entnahme der Brillenfassung aus dem Messbügel 8 werden die Schenkel 10, 10' durch die Rückstellfedern 14, 14' wieder in eine platzsparende Ausgangsstellung gebracht.

Vorteilhafterweise ist eine Einhandbedienung vorgesehen. D.h. beide Schenkel sind miteinander gekoppelt und können mittels Klemmelementen 17 bevorzugt zumindest annähernd simultan um das jeweilige Gelenk 13 bzw. 13' bewegt werden. Zum Ausführen der Klemmbewegung sind in bzw. an der Traverse 9 Verstellhebel 16 und 16' vorgesehen. Die Verstellhebel 16, 16' sind über ein gemeinsames zentrales Zahnrad 18, zwei Zahnstangen 19, 19' und zwei Zugbänder 20, 20' mit den Schenkeln 10, 10' verbunden. Beim Gegeneinanderdrücken der Verstellhebel 16 und 16' verschieben sich die Zahnstangen 19, 19' über das Zahnrad 20, 20'. Dadurch wird an den beiden Zugbänder 20, 20' gezogen und die Schenkel 10, 10' bewegen sich entgegen der Kraft der Rückstellfedern 14, 14' um das Gelenk 13, 13'. Nach dem Einsetzen der Brillenfassung lässt man die Verstellhebel los, die Schenkel bewegen sich soweit zurück in ihre Ausgangsposition, wie es die eingesetzte Brillenfassung zulässt und klemmen somit die Brillenfassung ein. Selbstverständlich sind auch andere Ausführungsformen vorstellbar. Z.B. anstelle der Verstellhebel 16, 16' ein Verstellschalter, Verstellrad oder ähnliches. Auch kann die Anzahl und Art der Klemmelemente 17 beliebig variieren. Vorstellbar ist beispielsweise eine Feder vorzugsweise in der Travers angeordnet, die mit den Zugbändern verbunden ist. Beim Zusammendrücken dieser Feder werden die Zugbänder gezogen und die daran befestigten Schenkel öffnen sich..

Soll nun der Messbügel 8 auf die Brillenfassung einer Versuchsperson aufgesetzt werden, so kann der Optiker oder die Versuchsperson selber mit einer Hand den Messbügel 8 halten sowie die Verstellhebel 16, 16' betätigen, woraufhin sich die Schenkel 10, 10' um das jeweilige Gelenk 13, 13' drehen und der Messbügel 8 auf die Brillenfassung aufsetzbar ist. Der Kunde kann während des Aufsetzens des Messbügels 8 seine Brillenfassung auflassen. Wird der Messbügel 8 von einer Testperson getragen, so erstreckt sich die Traverse 9 des Messbügels 8 zumindest annähernd horizontal, d.h. weitestgehend in der x-Achse und die z-Achse sollte zumindest weitestgehend mit optischen Achse des nicht dargestellten Videozentriersystems übereinstimmen. Die y-Achse beschreibt die vertikale Richtung.

Der Messbügel 8 soll möglichst leicht ausgebildet sein, hierfür bieten sich verschiedenste Kunststoffe an. Die Zugbänder 20, 20' sind bevorzugt aus Polyestermaterial mit einer hohen Zugfestigkeit ausgebildet. Der Messbügel 8 kann mit handelsüblichen Reinigungsmitteln sowie Alkoholen gereinigt werden.

An den Schenkeln 10, 10' unterhalb der Gelenke 13, 13' sind Anlagemarkierungen 21, 21', hier in Form schwarzer Kreise angebracht. Drehgelenk 13, 13', Fassungsaufnahme 12, 12' am Schenkel 10, 10' und Anlagemarkierungen 21, 21' der linken sowie der rechten Seite des Messbügels 8 sind jeweils in festem Abstand zueinander angeordnet. Diese Anlagemarkierungen 21, 21' dienen zur Berechnung der Anlagepunkte des Messbügels an eine insbesondere randlose Brillenfassung, für den Fall, dass eine automatische Fassungsranderkennung versagt. Drehgelenk 13, 13' , untere Fassungsaufnahme 11, 11'und Anlagemarkierung 21, 21' der linken und der rechten Seite sind jeweils im festen Abstand zueinander angeordnet.

Der Messbügel 8 weist Markierungen 22, 22' zur Maßverkörperung auf. Dies können z.B. zwei oder mehrere Markierungen 22, 22' sein, die in einem festen Abstand zueinander angeordnet sind oder auch ein Markierungsbalken definierter Länge. Die Markierungen 22, 22' können eine Doppelfunktion haben und auch zur Zentrierdatenbestimmung herangezogen werden. Die Zentrierdatenbestimmung wird weiter unten erläutert. Die Markierungen 22, 22' sollten einen Abstand von 5 bis 20 cm, bevorzugt 15 bis 20 cm aufweisen, bzw. ein hier nicht dargestellter Markierbalken sollte diese Länge aufweisen. Die Markierungen 22, 22'sollten bevorzugt auf der Traverse 9 angebracht werden. Durch die Maßverkörperung sind bei jeder Videoaufnahme oder Photoaufnahme feste Kalibrierungswerte vorgegeben. Damit kann problemlos mit verschiedenen Bildvergrößerungen gearbeitet werden.

Zur Zentrierdatenbestimmung sind auf dem Messbügel 8 Zielmarken 23, 24, 25, 27, 27', 28, 28'und 29, 29'angeordnet.

Zur Bestimmung des Vorneigungswinkel α sind drei Frontzielmarken 23, 24 und 25 auf der Vorderseite der Traverse 9 angeordnet. Dabei ist die mittlere Frontzielmarke 24 auf einem kegelförmigen Ausleger 26 in der Mitte der Traverse 9 angeordnet. Die beiden weiteren Frontzielmarken 23 und 25 sind äquidistant zur mittleren Frontzielmarke 24 im linken und rechten Endbereich der Vorderseite der Traverse 9 angeordnet. Diese beiden äußeren Frontzielmarken 23 und 25 müssen nicht äquidistant zur mittleren Frontzielmarke 24 sein, es ist nur ein definierter Abstand erforderlich. Die beiden äußeren Frontzielmarken 23 und 25 dienen in der vorliegenden Ausführungsform auch der Maßverkörperung, d.h. sind auch Markierungen 22 und 22'. Dadurch dass die mittlere Frontzielmarke 24 auf dem Frontausleger 26 angeordnet ist, ragt sie etwas in den Raum hinein, dass heißt in z-Richtung, in Richtung der nicht dargestellten Kamera. Dies ist insbesondere Figur 2b und 2d zu entnehmen.

Der Winkel der Kopfneigung zur Seite ζ wird aus dem Frontbild ermittelt in dem der Winkel zwischen den äusseren Frontzielmarken und der Raumhorizontalen gemessen wird.

Auch der Winkel der Kopfdrehung zur Seite ϕ kann aus dem Frontbild ermittelt werden.

Zur Bestimmung des Hornhautscheitelabstands weist zumindest eine Seite des Messbügels 8 Seitenzielmarken auf. Im vorliegenden Fall sind drei Seitenzielmarken 27, 28, 29 bzw. 27', 28', 29' pro Seite vorgesehen. Es sind aber auch mehr Seiten- sowie Frontzielmarken vorstellbar. Die Seitenzielmarken können an beiden Seiten oder nur an einer Seite angebracht sein. Diese Seitenzielmarken sind Figur 2 a und d zu entnehmen. Dabei ist pro Seite eine der Seitenzielmarken auf einem seitlichen Ausleger 30, 30' angeordnet. Das sind die Seitenzielmarken 27 bzw. 27'. Die beiden weiteren Seitenzielmarken 28 und 29, bzw. 28' und 29' sind direkt im Übergangsbereich 31, 31' zwischen Traverse 9 und Schenkel 10, 10' angeordnet. Dadurch sind diese beiden Seitenzielmarken 28 und 29 bzw. 28' und 29' gegenüber der dritten Seitenzielmarke 27 bzw. 27' im Raum, hier in x-Richtung etwas zurückgesetzt angeordnet.

Zur Bestimmung des Hornhautscheitelabstands oder des Abstandes Hornhautscheitel zu Fassungsebene kann sich der Kunde in Richtung Bildaufnahmeeinheit 38 drehen oder aber die seitlichen Zielmarken 27, 27', 28, 28' 29, 29' werden über eine nicht dargestellte Spiegelanordnung zur Bildaufnahme 38 hingespiegelt. Wahlweise kann auch eine zweite Bildaufnahmeeinheit 39 vorgesehen sein.

Der Winkel der Kopfdrehung zur Seite ϕ wird über die Streckenverhältnisse zwischen der mittleren Frontzielmarke 24 und den beiden äußeren Frontzielmarken 23 und 25 berechnet. Für die Bestimmung des Winkel der Kopfdrehung zur Seite ϕ kann das Frontbild oder Seitenbild herangezogen werden. Bei Bestimmung mittels Seitenbildaufnahme und Seitenzielmarken kann der Winkel der Kopfdrehung zur Seite ϕ bei der Ermittlung des Hornhautscheitelabstands berücksichtigt werden. Bei der Bestimmung mittels Frontbildaufnahme kann der Winkel der Kopfdrehung zur Seite ϕ zur Bestimmung der x und y- Zentrierdaten herangezogen werden.

Bei allen Zielmarken ist von Bedeutung, dass jeweils mindestens drei Zielmarken vorhanden sein müssen, um einen Winkel zu bestimmen, wobei zumindest eine dieser Zielmarken gegenüber zumindest zwei anderen dieser Zielmarken in Richtung der optischen Achse der Bildaufnahme um einen definierten Betrag versetzt angeordnet sein müssen. Die Zielmarken einer Zielmarkengruppe, d.h. die Zielmarken, die zur Bestimmung eines Winkels herangezogen werden sind bevorzugt in einer horizontalen Reihe für die Bestimmung des Vorneigungswinkels und in einer senkrechten Reihe für die Bestimmung des Kopfneigungswinkels angeordnet.

Die Zielmarken können aufgeklebt oder aufgezeichnet sein. Die herausragenden Zielmarken 24, 27 und 27' sind gegenüber den weiteren Zielmarken ihrer Zielmarkengruppe, d.h. mittlere Frontzielmarke 24 gegenüber der linken Frontzielmarke 23 und der rechten Frontzielmarke 25 sowie obere Seitenzielmarke 27 bzw. 27' gegenüber mittlerer Seitenzielmarke 28 bzw. 28' und unterer Seitenzielmarke 29 bzw. 29' um z.B. 0,5 bis 3 cm versetzt angeordnet. D.h. die Ausleger haben eine bevorzugte Länge von 0.5 bis 3 cm. Größere Ausleger 26, 30, 30' sind vorstellbar, können aber unhandlich sein. Bei einer Seitenaufnahme sind diese oberen Seitenzielmarken 27, 27' dann näher an der Aufnahmeeinheit 39 oder weiter entfernt angeordnet als die übrigen Seitenzielmarken 28, 28',29, 29'. Das heißt, bei einer Seitenaufnahmen von der einen Seite ist Seitenzielmarke 27 näher an der Aufnahmeeinheit 39 als Seitenzielmarken 28 und 29. Bei einer Seitenaufnahme mit einer an der anderen Seite angeordneten Aufnahmeeinheit ist Seitenzielmarke 27' näher an der Aufnahmeeinheit als Seitenzielmarken 28' und 29'.

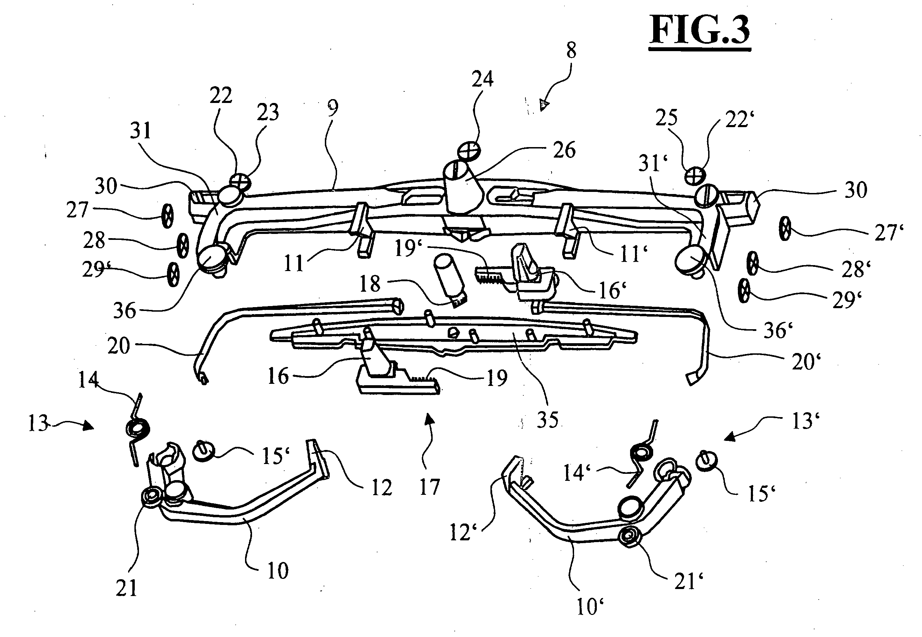

Figur 3 zeigt eine Explosionsdarstellung des Messbügels nach Figuren 2a-d. Verstellhebel 16 und 16' sind miteinander über Zahnstangen 19 und 19' und ein zentrales Zahnrad 18 verbunden. Das zentrale Zahnrad 18 ragt teilweise in den als Hohlkegel ausgebildeten Frontausleger 26 hinein. Die Verstellhebel 16, 16'sind über zwei Zugbänder 20, 20' mit den Schenkeln 10, 10' verbunden.. Die Gelenke 13, 13' weisen Abdeckkappen mit Gelenkstiften 36, 36' auf.

Figur 4 zeigt einen Messbügel 8 mit eingesetzter Brillenfassung 32. Die Frontzielmarken 23, 24 und 25 sind kreisrund ausgebildet, wobei zwei sich gegenüber liegende Kreisviertel dunkel und zwei hell ausgebildet sind. Dadurch wird ein guter Kontrast erreicht, der eine Messung erleichtert. Bei einer randlosen Brillenfassung (Bohrbrille, Nylorbrille) finden transparente Stützscheiben Verwendung.
Zusätzlich können weitere Markierungen auf den Gelenkabdeckkappen 36, 36' aufgebracht werden, wodurch die Kalibrierung des jeweiligen Messbügels zu Beginn der Einstellung des jeweiligen Videozentriersystems durch Abstandsmessungen erfolgen kann.

Figur 5 zeigt in einer Detailansicht eine oberen und eine untere Brillenfassungsaufnahme 11 und 12 mit einer gestrichelt dargestellten Brillenfassung 32. Die Fassungsaufnahmen 11 und 12 können z.B. eine Art V- Form oder eine konische Form aufweisen und können ganz oder teilweise eine Ummantelung 33 aus weichem Material, z.B. aus Kunststoff aufweisen, um die Brillenfassung 32 zu schonen und ein Verkratzen zu verhindern. Die Aufgrund der Form der Fassungsaufnahmen können Brillenfassungen 32 unterschiedlicher Dicke sicher aufgenommen werden

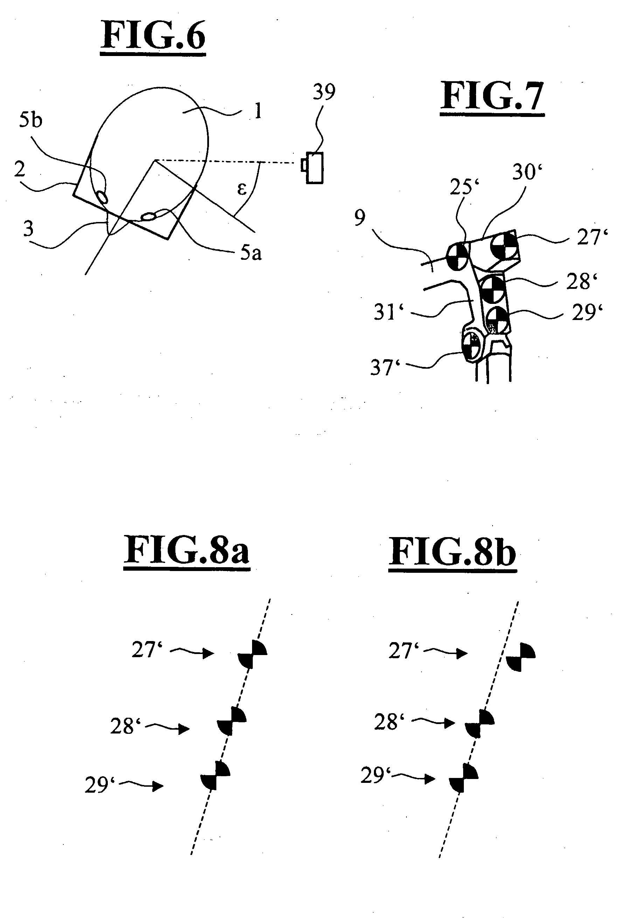

Figur 6 stellt den Verdrehwinkel ε bei einer Seitenaufnahme dar. Die Aufnahmeeinheit 39 ist hierbei in der Verlängerung der gestrichpunkteten Linie angeordnet. Bei einer Seitenbildaufnahme sollte der Kunde genau senkrecht zur Kamera ausgerichtet sein, d.h. der Blick des Kunden durch die Brillenfassung 2 soll senkrecht zur optischen Achse einer Aufnahmeeinheit, z.B. einer Videokamera oder eines Photoapparates verlaufen. Die Blickrichtung ist in Figur 6 mit der durchgezogenen Linie durch die Nase des Kunden angedeutet. Wenn ε gleich Null ist verläuft diese Linie senkrecht zur gestrichpunkteten Linie. D.h. die Fassungsebene der Brillenfassung und 2 und die Traverse 9 des Messbügels können bei ε gleich Null parallel oder zumindest annähernd parallel zur gestrichpunkteten Linie verlaufen. Dies ist mit sehr viel Aufwand verbunden und unangenehm für den zu vermessenden Kunden. Zumal dieser beim Stillhalten zu einer nicht habituellen Haltung neigt. Bereits bei einer geringfügigen Verdrehung des Kopfes 1 und damit der Brillenfassung 2 von beispielsweise ε = 1° entstehen ein Fehler von ca. 1 mm bei der Messung des Hornhautscheitelabstandes oder des Abstandes Hornhautscheitel zur Fassungsebene. Dieser Fehler muss kompensiert werden, um eine genaue Messung zu erlangen. Mit dem vorgestellten Verfahren kann sehr hohe Messgenauigkeit erlangt werden. Bei einer Verdrehung von max. ± 10° kann durch Kompensation des Verdrehfehlers immer noch ein Hornhautscheitelabstand oder Abstand Hornhautscheitel zur Fassungsebene mit einer Abweichung von < 0,5 mm erlangt werden. Ohne Kompensation können Fehler von ± 10 mm abseits vom wahren Wert vorliegen. Da die Abweichung generell nicht höher als ± 1 mm liegen sollte, wären höhere Fehlmessungen zu verwerfen.
Bei Vorhandensein von drei Zielmarken kann also die Lage des Messbügels in Bezug zur Kamera aus der Lage der drei Zielmarken abgeleitet werden.
Die beiden Verdrehwinkel ϕ (Verdrehwinkel bei Frontaufnahme) und Verdrehwinkel ε (Verdrehwinkel bei Seitenaufnahme) können unabhängig voneinander bestimmt werden und bei den jeweiligen Messungen, z.B. x und y- Zentrierdaten, Hornhautscheitelabstand und Hornhautscheitel zu Fassungsebene herangezogen werden.

Zu den erfindungsgemäßen drei Seitenzielmarken 27, 27'; 28, 28', 29,29' wird im Folgenden detailliert eingegangen. Eine bevorzugte Ausführungsform der Seitenzielmarken 27, 27'; 28, 28', 29,29' ist den Figuren 7 und 8a und 8b zu entnehmen.

Die Seitenzielmarken 27, 27'; 28, 28', 29,29' werden bevorzugt auf einem Seitenausleger 30, 30' und einem bevorzugt lotgerecht verlaufenden Seitenbereich des Messbügels (Übergangsbereich 31, 31') angebracht (Y-Richtung nach Figur 2d). Notwendig ist, dass eine der Seitenzielmarken 27, 27' in Richtung einer Aufnahmeeinheit 39 bezüglich der beiden anderen Seitenzielmarken 28, 28', 29, 29' in einer anderen Ebene liegt. Bevorzugt wird diese Seitenzielmarken 27, 27' auf einer hervorstehenden Nase 30, 30' angebracht. Diese Seitenzielmarke 27, 27' kann aber auch gegenüber den beiden anderen Seitenzielmarken 28, 28', 29, 29'zurück versetzt angeordnet sein. Bei senkrechter Ausrichtung des Kunden samt Brillenfassung 2 zur Aufnahmeeinheit 39 beträgt der Verdrehwinkel ε = 0° und die drei Seitenzielmarken liegen in einer Gerade. Bei der Kopfdrehung nach links oder rechts steigt der Verdrehwinkel ε an. Typische Winkel bei habitueller Haltung sind bis zu ± 10°. Diese Verdrehung spiegelt sich in der Abweichung der dritten Zielmarke 27, 27' zu der von den beiden anderen Zielmarken 28, 28', 29, 29' aufgespannten Gerade wieder. Diese Abweichung ist in Figur 8a und 8b wiedergegeben und wird optisch erfasst und ausgewertet. An Hand der Parallaxe kann der Verdrehwinkel ε ermittelt werden und bei der Bestimmung des Hornhautscheitelabstandes oder eines Abstandes zwischen Hornhautscheitel und Fassungsebene ermittelt werden. Selbstverständlich muss die hervorstehende dritte Zielmarke 27, 27' nicht mit den beiden anderen Zielmarken 28, 28' und 29, 29' in einer Gerade -in Y-Richtung nach Figur 2d- angeordnet sein. Sie kann auch seitlich versetzt angeordnet sein. Jedoch muss die Seitenzielmarke 27, 27' herverstehend oder zurück gesetzt zu der von den beiden anderen Seitenzielmarken 28, 28', 29, 29' aufgespannten Gerade sein. Bei einer vorrichtungsgemäß seitlich versetzten Seitenzielmarke muss diese Versetzung für die Vermessung vorher bekannt sein und bei der Berechnung des Verdrehwinkels ε berücksichtigt werden. Des weiteren sind mehr als drei Seitenzielmarken und Frontzielmarken vorstellbar.

Ergänzende Frontzielmarken 37, 37' sind in Figur 4 dargestellt. Diese ergänzenden Frontzielmarken ermöglichen die Anwendung von Auswertungslogarithmen bei denen keine Kalibrierung notwendig wird. Vorstellbar sind beispielsweise fünf Messmarkierungen in der Frontansicht und/oder 5 Messmarkierungen in der Seitenansicht. Für die Frontansicht gilt, dass üblicherweise nur wenige Marken Verwendung finden. Die Verwendung aller 5 Marken erlaubt aber eine verbesserte Auswertung mit verschiedenen wichtigen Vorteilen. Im einzelnen handelt es sich dabei um eine deutlich robustere Erkennung des Messbügels bei kritischen Bildern, z.B. ungeeigneter Bildhintergrund mit vielen markerähnlichen Objekten. Des weiteren ist eine unabhängige Kalibrierung von Kamera und Messbügel möglich. Eine verbesserte Messgenauigkeit ist auch bei deutlich größeren Verdreh- und Vorneigungswinkeln des Bügels möglich. Zudem kann eine Simulation der vollständigen Kundenmessung und damit z.B. einer Ableitung von Fertigungstoleranzen des Meßbügels erlangt werden. Zur Anwendung bei der Seitenansicht und seitlichen Verdrehung reicht eine ergänzende Zielmarke aus, die mit den beiden Seitenzielmarken 28, 28', 29, 29' oder Frontzielmarken 23 und 25 eine Ebene aufspannt. Die dritte ursprüngliche Zielmarke 27, 27' oder 24 verbleibt jedoch auf ihrer hervorstehenden oder zurückgesetzten Nase.

**Bezugszeichenliste**

| | | | |
|---|---|---|---|
| 1 | Kopf | 32 | Brillenfassung |
| 2 | Brillenfassung | 33 | Ummantelung |
| 3 | Nase | | |
| 4 | optische Achse | 35 | Rückwand der Traverse |
| 5a | Führungsauge | 36, 36' | Gelenkstift mit Abdeckkappe |
| 5b | zweites Auge | 37, 37' | ergänzende Frontzielmarke |
| 6 | Horizontale | 38 | Aufnahmeeinheit |
| 7 | Raumvertikale | 39 | Aufnahmeeinheit |
| 8 | Messbügel | | |
| 9 | Taverse | | |
| 10, 10' | Schenkel | | |
| 11, 11' | obere Fassungsaufnahmen | | |
| 12, 12' | untere Fassungsaufnahmen | | |
| 13, | 13' Gelenk | | |
| 14, 14' | Schraubenfedern | | |
| 15, 15' | Abdeckkappen | | |
| 16, | 16' Verstellhebel | | |
| 17 | Klemmelemente | | |
| 18 | Zahnrad | | |
| 19, 19' | Zahnstangen | | |
| 20, 20' | Zugbänder | | |
| 21, 21' | Anlagemarkierungen | | |
| 22, 22' | Markierungen zur Maßverkörperung | | |
| 23 | linke Frontzielmarke | | |
| 24 | mittlere Frontzielmarke | | |
| 25 | rechte Frontzielmarke | | |
| 26 | Frontausleger | | |
| 27, 27' | obere Seitenzielmarken | | |
| 28, 28' | mittlere Seitenzielmarken | | |
| 29, 29' | untere Seitenzielmarken | | |
| 30, 30' | Seitenausleger | | |
| 31, 31' | Übergangsbereich | | |

## Patentansprüche

1. Messbügel (8) zum lösbaren Befestigen an einer Brillenfassung (2, 32) mit einer Traverse (9) und zwei Schenkeln (10, 10')
wobei eine Vorderseite des Messbügels (8) zumindest drei Frontzielmarken (23, 24, 25) für eine Messung des Vorneigungswinkels (α) einer zu vermessenden Brillenfassung (32) aufweist und zumindest eine der Frontzielmarken (24) gegenüber den zumindest zwei anderen Frontzielmarken (23, 25) im Wesentlichen senkrecht zur Vorderseite des Messbügels (8) räumlich versetzt angeordnet ist,
**dadurch gekennzeichnet, dass**
zumindest drei Seitenzielmarken (27, 27', 28, 28', 29, 29') auf einer Seite des Messbügels zur Messung eines Verdrehwinkels (ε) vorgesehen sind, wobei zumindest eine der Seitenzielmarken (27, 27') gegenüber den zumindest zwei weiteren Seitenzielmarken (28, 28', 29, 29') im Wesentlichen senkrecht zum Seitenbereich des Messbügels (8) räumlich versetzt angeordnet ist.

2. Messbügel (8) nach Anspruch 1, **dadurch gekennzeichnet, dass** eine der Seitenzielmarken (27, 27') auf einem hervorstehenden Seitenausleger (30, 30') oder in einer Einbuchtung angeordnet ist.

3. Messbügel (8) nach einem der Ansprüche 1 oder 2, **dadurch gekennzeichnet, dass** gekoppelte Klemmelemente (17) zum Befestigen der Brillenfassung (32) vorgesehen sind.

4. Messbügel (8) nach Anspruch 3, **dadurch gekennzeichnet, dass** die gekoppelten Klemmelemente (17) synchronisiert sind.

5. Messbügel (8) nach einem der vorhergehenden Ansprüche, **dadurch gekennzeichnet, dass** die Frontzielmarken (23, 24, 25) auf einer waagerechten Geraden im Bereich der Traverse (9) angeordnet sind.

6. Messbügel (8) nach einem der vorhergehenden Ansprüche, **dadurch gekennzeichnet, dass** eine mittlere Frontzielmarke (24)der Frontzielmarken (23, 24, 25) auf einem hervorstehenden Ausleger (26) angeordnet ist und zumindest zwei weitere Frontzielmarken (23, 25) beabstandet zueinander auf der Vorderseite einer Traverse (9) des Messbügels (8) angeordnet sind.

7. Messbügel (8) nach einem der vorhergehenden Ansprüche, **dadurch gekennzeichnet, dass** der Abstand zwischen vorderer Frontzielmarke (24) und hinterer Frontzielmarke (23, 25) zwischen 5 und 50 mm beträgt.

8. Messbügel (8) nach einem der vorhergehenden Ansprüche, **dadurch gekennzeichnet, dass** zur Maßverkörperung zumindest zwei Markierungen (22, 22') einen definierten Abstand voneinander von 10 bis 20 cm aufweisen.

9. Messbügel (8) nach einem der vorhergehenden Ansprüche, **dadurch gekennzeichnet, dass** zumindest eine Fassungsaufnahme (11, 11', 12, 12') zumindest eine im Wesentlichen konische Aufnahmefläche aufweist.

11. Messbügel nach einem der Ansprüche 3 bis 4, **dadurch gekennzeichnet, dass** die Klemmelemente (17) über ein Zahngetriebe (18, 19, 19') gekoppelt sind.

12. Messbügel (8) nach Anspruch 11, **dadurch gekennzeichnet, dass** die Klemmelemente (17) zumindest ein Zahnrad (18) und zumindest eine Zahnstange (19, 19') aufweisen.

13. Messbügel (8) nach Anspruch 12, **dadurch gekennzeichnet, dass** die gekoppelten Klemmelemente (17) zumindest ein Zugband (20, 20') und eine Feder (14, 14') aufweisen.

14. Einrichtung zur Bestimmung des Vorneigungswinkels (α) einer Brillenfassung (2, 32) mit zumindest einer optischen Aufnahmeeinheit (38, 39), einer Auswerteeinheit und einem Messbügel (8) nach einem der vorhergehenden Ansprüche.

15. Einrichtung nach Anspruch 14, **dadurch gekennzeichnet, dass** als optische Aufnahmeeinheit (38, 39) eine Videokamera oder ein Photoapparat vorgesehen sind.

16. Einrichtung nach Anspruch 14 oder 15, **dadurch gekennzeichnet, dass** die Auswerteeinheit auch zur Bestimmung eines Winkels (ζ) der Kopfneigung zur Seite, des Verdrehwinkels (ε) der Kopfdrehung zur Seite und eines Hornhautscheitelabstands ausgebildet ist.

17. Einrichtung nach einem der Ansprüche 14 bis 16, **dadurch gekennzeichnet, dass** die Auswerteeinheit zur Bestimmung der Zentrierpunkte der zu untersuchenden Brillenfassung (2, 32) ausgebildet ist.

18. Verfahren zur Bestimmung des Verdrehwinkels (ε), **dadurch gekennzeichnet, dass** ein nach einem der vorhergehenden Ansprüche 1 bis 13 ausgebildeter Messbügel (8) auf
eine Brillenfassung (2, 32) aufgesetzt wird,
eine Bildaufnahme von der Seite mit Brillenfassung (2, 32) und Messbügel (8) gemacht wird und anhand dieser Bildaufnahme der Verdrehwinkel (ε) mathematisch bestimmt wird.

19. Verfahren nach Anspruch 18, **dadurch gekennzeichnet, dass** der Hornhautscheitelabstand einer beliebigen Person unter Berücksichtigung des Verdrehwinkels (ε) ermittelt wird.

## Claims

1. Measuring brace (8) for detachable fastening to a spectacle frame (2, 32),
comprising a crossbeam (9) and two limbs (10, 10'),
wherein a front side of the measuring brace (8) has at least three front target marks (23, 24, 25) for measuring the pantoscopic tilt (α) of a spectacle frame (32) to be measured and at least one of the front target marks (24) is arranged spatially offset in a manner substantially perpendicular to the front side of the measuring brace (8) in relation to the at least two other front target marks (23, 25),
**characterized in that**
at least three side target marks (27, 27', 28, 28', 29, 29') are provided on a side of the measuring brace for measuring an angle of twist (ε), wherein at least one of the side target marks (27, 27') is arranged spatially offset in a manner substantially perpendicular to the side region of the measuring brace (8) in relation to the at least two further side target marks (28, 28', 29, 29').

2. Measuring brace (8) according to Claim 1, **characterized in that** one of the side target marks (27, 27') is arranged on a protruding side arm (30, 30') or in an indentation.

3. Measuring brace (8) according to either of Claims 1 and 2, **characterized in that** provision is made of coupled clamping elements (17) for fastening the spectacle frame (32).

4. Measuring brace (8) according to Claim 3, **characterized in that** the coupled clamping elements (17) are synchronized.

5. Measuring brace (8) according to one of the preceding claims, **characterized in that** the front target marks (23, 24, 25) are arranged on a horizontal straight line in the region of the crossbeam (9).

6. Measuring brace (8) according to one of the preceding claims, **characterized in that** a middle front target mark (24) of the front target marks (23, 24, 25) is arranged on a protruding arm (26) and at least two further front target marks (23, 25) are arranged at a distance from one another on the front side of a crossbeam (9) of the measuring brace (8).

7. Measuring brace (8) according to one of the preceding claims, **characterized in that** the distance between the forward front target mark (24) and rear front target mark (23, 25) is between 5 and 50 mm.

8. Measuring brace (8) according to one of the preceding claims, **characterized in that**, for the measurement standard, at least two markings (22, 22') have a defined distance from one another of 10 to 20 cm.

9. Measuring brace (8) according to one of the preceding claims, **characterized in that** at least one frame receptacle (11, 11', 12, 12') has at least one substantially conical receptacle area.

11. Measuring brace according to either of Claims 3 and 4, **characterized in that** the clamping elements (17) are coupled to one another by way of a toothed gear (18, 19, 19').

12. Measuring brace (8) according to Claim 11, **characterized in that** the clamping elements (17) have at least one gearwheel (18) and at least one rack (19, 19').

13. Measuring brace (8) according to Claim 12, **characterized in that** the coupled clamping elements (17) have at least one strap (20, 20') and a spring (14, 14').

14. Apparatus for determining the pantoscopic tilt (α) of a spectacle frame (2, 32), comprising at least one optical recording unit (38, 39), an evaluation unit and a measuring brace (8) according to one of the preceding claims.

15. Apparatus according to Claim 14, **characterized in that** a video camera or a photographic camera is provided as optical recording unit (38, 39).

16. Apparatus according to Claim 14 or 15, **characterized in that** the evaluation unit is also embodied to determine an angle (ζ) of the inclination of the head to the side, the angle of twist (ε) of the twist of the head to the side and a vertex distance.

17. Apparatus according to one of Claims 14 to 16, **characterized in that** the evaluation unit is embodied to determine the centration point of the spectacle frame (2, 32) to be examined.

18. Method for determining the angle of twist (s), **characterized in that** a measuring brace (8) embodied according to one of the preceding Claims 1 to 13 is placed onto a spectacle frame (2, 32), an image recording with the spectacle frame (2, 32) and measuring brace (8) is made from the side and the angle of twist (ε) is determined mathematically on the basis of this image recording.

19. Method according to Claim 18, **characterized in that** the vertex distance of any person is established taking into account the angle of twist (ε).

## Revendications

1. Étrier de mesure (8) pour la fixation détachable à une monture de lunettes (2, 32) comprenant une traverse (9) et deux branches (10, 10'), un côté avant de l'étrier de mesure (8) présentant au moins trois marquages cibles frontaux (23, 24, 25) pour une mesure de l'angle d'inclinaison antérieur (α) d'une monture de lunettes (32) à mesurer, et au moins l'un des marquages cibles frontaux (24) étant disposé de manière décalée spatialement par rapport aux au moins deux autres marquages cibles frontaux (23, 25) essentiellement perpendiculairement au côté avant de l'étrier de mesure (8),
**caractérisé en ce**
**qu'**au moins trois marquages cibles latéraux (27, 27', 28, 28', 29, 29') sont prévus sur un côté de l'étrier de mesure en vue de la mesure d'un angle de rotation (ε), au moins l'un des marquages cibles latéraux (27, 27') étant disposé de manière décalée spatialement par rapport aux au moins deux autres marquages cibles latéraux (28, 28', 29, 29') essentiellement perpendiculairement à la région latérale de l'étrier de mesure (8).

2. Étrier de mesure (8) selon la revendication 1, **caractérisé en ce que** l'un des marquages cibles latéraux (27, 27') est disposé sur un bras latéral en porte-à-faux (30, 30') ou dans un renfoncement.

3. Étrier de mesure (8) selon l'une quelconque des revendications 1 ou 2, **caractérisé en ce que** des éléments de serrage accouplés (17) sont prévus pour la fixation de la monture de lunettes (32).

4. Étrier de mesure (8) selon la revendication 3, **caractérisé en ce que** les éléments de serrage accouplés (17) sont synchronisés.

5. Étrier de mesure (8) selon l'une quelconque des revendications précédentes, **caractérisé en ce que** les marquages cibles frontaux (23, 24, 25) sont disposés sur une droite horizontale dans la région de la traverse (9).

6. Étrier de mesure (8) selon l'une quelconque des revendications précédentes, **caractérisé en ce qu'**un marquage cible frontal central (24) des marquages cibles frontaux (23, 24, 25) est disposé sur un bras en porte-à-faux (26) et au moins deux autres marquages cibles frontaux (23, 25) sont disposés à distance l'un de l'autre sur le côté avant d'une traverse (9) de l'étrier de mesure (8).

7. Étrier de mesure (8) selon l'une quelconque des revendications précédentes, **caractérisé en ce que** la distance entre le marquage cible frontal avant (24) et le marquage cible frontal arrière (23, 25) est comprise entre 5 et 50 millimètres.

8. Étrier de mesure (8) selon l'une quelconque des revendications précédentes, **caractérisé en ce que** pour l'étalonnage, au moins deux marquages (22, 22') présentent une distance définie l'un de l'autre de 10 à 20 cm.

9. Étrier de mesure (8) selon l'une quelconque des revendications précédentes, **caractérisé en ce qu'**au moins un logement de monture (11, 11', 12, 12') présente au moins une surface de réception essentiellement conique.

11. Étrier de mesure selon l'une quelconque des revendications 3 à 4, **caractérisé en ce que** les éléments de serrage (17) sont accouplés par le biais d'un engrenage (18, 19, 19').

12. Étrier de mesure (8) selon la revendication 11, **caractérisé en ce que** les éléments de serrage (17) présentent au moins une roue dentée (18) et au moins une crémaillère (19, 19').

13. Étrier de mesure (8) selon la revendication 12, **caractérisé en ce que** les éléments de serrage accouplés (17) présentent au moins une bande de traction (20, 20') et un ressort (14, 14').

14. Dispositif pour déterminer l'angle d'inclinaison antérieure (α) d'une monture de lunettes (2, 32) comprenant au moins une unité d'enregistrement optique (38, 39), une unité d'analyse et un étrier de mesure (8) selon l'une quelconque des revendications précédentes.

15. Dispositif selon la revendication 14, **caractérisé en ce que** l'on prévoit en tant qu'unité d'enregistrement optique (38, 39) une caméra vidéo ou un appareil photo.

16. Dispositif selon la revendication 14 ou 15, **caractérisé en ce que** l'unité d'analyse est également réalisée pour déterminer un angle (ζ) de l'inclinaison de la tête vers le côté, l'angle de rotation (ε) de la rotation de la tête vers le côté et une distance oeil-verre.

17. Dispositif selon l'une quelconque des revendications 14 à 16, **caractérisé en ce que** l'unité d'analyse est réalisée pour déterminer les centres de la monture de lunettes à examiner (2, 32).

18. Procédé pour déterminer l'angle de rotation (ε), **caractérisé en ce qu'**un étrier de mesure (8) réalisé selon l'une quelconque des revendications précédentes 1 à 13 est placé sur une monture de lunettes (2, 32), un enregistrement d'image est effectué depuis le côté avec la monture de lunettes (2, 32) et l'étrier de mesure (8), et à l'aide de cet enregistrement d'image, l'angle de rotation (ε) est déterminé mathématiquement.

19. Procédé selon la revendication 18, **caractérisé en ce que** la distance oeil-verre d'une personne quelconque est déterminée en tenant compte de l'angle de rotation (ε).
